# EUROPEAN PATENT APPLICATION

(11) **EP 2 687 889 A1**
(43) Date of publication of application: **22.01.2014**
(21) Application number: 12275106.8
(22) Date of filing: 16.07.2012
(51) Int. Cl.: G02B 13/14

(54) **Athermalized infrared objective having three lenses**

(71) Applicant: MBDA UK Limited, Stevenage, Hertfordshire SG1 2DA (GB)
(72) Inventor: The designation of the inventor has not yet been filed
(74) Representative: BAE SYSTEMS plc Group IP Department

(57) **Abstract**

An objective lens system (10) for focusing infrared images in a remote sensor platform, the lens system comprising a thermo-optically athermalised lens triplet (20), formed by a doublet (30) and a rear element (40), the doublet (30) being a first lens (50) of chalcogenide and a second lens (60) of germanium.

## Description

### Field of the Invention

This invention relates to infrared objective lens systems for use in remote sensor platforms. More particularly, but not exclusively, the invention relates to an objective lens system for use in the long-waveband infrared (IR) spectrum (7.5 µm to 11.5 µm). Still more particularly, but not exclusively, the invention relates to a high relative aperture (≤ F/1.0) fixed-focus objective lens system for use in the long-waveband IR spectrum. Also, the invention relates to an objective lens system suitable for use with an uncooled bolometric focal plane array (FPA) detector in the remote sensor platform.

### Background of the Invention

Remote sensor platforms, such as unmanned aerial vehicles (UAVs), require high-quality optical systems that are robust under a range of environmental conditions. Furthermore, it is desirable for such systems to be simple, compact and low-cost, so as to minimise the size, weight and expense that the systems add to the UAV. It is desirable therefore to limit as far as possible the complexity of any associated control systems and mechanisms that are needed to maintain optical performance. For fixed-focus remotely operating lens systems, maintenance of optical performance requires stabilisation of imaging characteristic and focus with respect to environmental temperature, i.e., 'athermalisation'.

Athermalisation is important for high-relative-aperture ('fast') optics, since depth of focus (DOF = ± 2.λ.(F#)², where λ is the imaging wavelength and F# is the F-number of the lens system), diminishes as a function of F#², leading to an increased sensitivity to focus errors.

Athermalisation also becomes particularly relevant in long and medium waveband (LWIR & MWIR) applications, since for many commonly used IR lens materials, the temperature dependence of refractive index (dn/dt) is relatively large. In fact (dn/dt) can be as much as an order of magnitude greater than that of many optical glasses used for visible & near IR (V&NIR) optics. Hence, whereas drifts in focus and performance due to temperature changes are comparatively small with V&NIR optics, and caused largely by expansion and contraction of components and mounts, with LWIR and MWIR systems they are substantially greater and generally dominated by refractive-index changes. It is not uncommon, for instance, with an LWIR system, for the effects of index variations to exceed those due to expansion and contraction by half an order of magnitude.

Although athermalisation can usually be achieved *actively,* by means of an electronically controlled servo system, this is not a preferred option, especially for limited-budget UAV sensor and seeker applications. In such cases, the preference is for *passive* athermalisation, since this allows complexity and weight issues to be more easily controlled and the expense associated with sophisticated electro-mechanical systems to be avoided.

With passive athermalisation, use is made of the thermal properties of the materials used for the optical and mechanical components and may be accomplished either on the basis of a thermo-optical lens solution or by adopting a thermo-mechanical approach. In the former case, temperature invariance of focus is secured by selecting, as part of the core design, lens component materials of specific dn/dt values such that the drifts induced by the individual components cancel exactly within the system.

In the latter case, the system is designed conventionally, but with the optical components located in an arrangement of sliding mounts (occasionally spring-loaded), which introduce, through differential expansion, the requisite compensatory movements to maintain focus. Although, the mounts must be configured and their materials selected carefully to achieve this, since the optical configuration of the system is not itself constrained by the athermalisation requirement, it is less demanding to develop. This makes the thermo-mechanical approach seemingly attractive. Regrettably however, in practice it frequently proves to be problematical. This is generally due to static-friction effects resulting in intermittent seizing of the mechanism, which leads to erratic or irregular movements of the optical components and corresponding focus errors. For a high relative aperture system, in which sensitivity to focus is greater than in a lower relative aperture system, the consequences of such errors become even more accentuated. Although the *thermo-optical* approach is initially more difficult to develop, such problems may be avoided by adopting it, since lens components may then be hard-mounted in their supporting structures, obviating the need for mechanisms.

It is this approach that is the subject of the present invention which therefore seeks to mitigate the above-mentioned problems.

### Summary of the Invention

In a first aspect, the invention provides an objective lens system for focusing infrared images in a remote sensor platform, the lens system comprising a thermo-optically athermalised lens triplet, formed by a doublet and a rear element, the doublet being a first lens of chalcogenide and a second lens of germanium.

The objective lens system may include a detector, on which the infrared images are focused. The detector may be a bolometric focal plane array. It may be that the bolometric focal plane array is uncooled.

Thus a stable thermo-optical characteristic (i.e. athermalisation) can be achieved for the objective primarily through the selection of the particular materials used for the doublet. Significantly, by employing a chalcogenide, which has a relatively small thermal dispersion characteristic, for the first lens, and germanium, with its relatively large dispersion characteristic, for the second lens, thermal drift due to the first lens can be cancelled by thermal drift due to the second lens. The athermalisation enables focus, and hence image quality, to be maintained over a wide range of environmental soak temperatures, for example - 40°C to +85°C, which makes the lens system particularly suitable for use with uncooled bolometric detectors for remote operation. Advantageously a fixed, rigid supporting structure may be used, in which the individual elements are hard-mounted in a conventional manner.

It may be that the doublet also provides an additional over-correction selected to compensate for thermal drift introduced by the rear element.

It may be that the doublet also provides an additional over-correction selected to compensate for dimensional changes (due to expansion or contraction) of optical elements, and/or their mounting structure(s), within the system. It may be that all mounting structures within the system are of a single material (e.g. an aluminium alloy) and may thus provide a common interface between the optical elements, which may be hard-mounted within it. Alternatively, it may be that there are mounting structures within the system that are of a different material from other mounting structures.

Preferably, the thermo-optically athermalised lens triplet provides an optical performance substantially independent of temperature over an operating temperature range of the remote sensor platform. For example, it may be that it provides an optical performance substantially independent of temperature beyond ± 10° from a design temperature. It may be that it provides an optical performance substantially independent of temperature between -40°C and +85°C. For example, it may be that the effective focal length of the triplet remains substantially independent of temperature over the operating temperature range. It may be, for example, that the resolution of the system remains substantially independent of temperature over the system operating temperature range. The resolution of the system may be measured in terms of a polychromatic modulation transfer function. It may be that, in terms of a polychromatic modulation transfer function at a cut-off frequency of the detector (e.g. 40 cycles mm⁻¹), the resolution of the system remains within 20% of diffraction limited performance over a soak temperature range extending over 80°C or more, preferably over 120°C or more, for example between -40° C and +80° C. It may be that, in terms of a modulation transfer function at a Nyquist frequency of the detector (e.g. 20 cycles mm⁻¹), the resolution of the system remains within 15% of diffraction limited performance over a temperature range extending over 80 °C or more, preferably over 120° C or more, for example between -40° C and +85C.

It may be that the IR images are in the long wave band within the infrared spectrum (i.e. in the wavelength range 7.5 µm to 11.5 µm).

Advantageously, the system may be compact. It may be that the overall length, i.e. distance from the first lens to the detector, is between 100% and 120% of the effective focal length of the objective lens system.

It may be that the back focal clearance is at least 5% of the effective focal length.

The rear element may be a third lens of zinc selenide

The chalcogenide may be a glass. The chalcogenide may be amorphous. The chalcogenide may be or include a mixture of arsenic and selenium. It may be that the mixture is in the ratio of arsenic to selenium of between 30:70 and 50:50, for example between 35:65 and 45: 55, for example approximately 40:60.

The calcogenide may be infrared glass IG6 available from Vitron Spezialwerkstoffe GmbH, Am Naßtal 5, D-07751 Jena-Maua, Germany, see http://www.vitron.de/english/IR-Glaeser/Daten-Infrarotglaeser.php#IG6. The doublet may be an air-separated doublet.

It may be that the focal length ratio for the first lens to the second lens is 0.30 or less.

It may be that the objective lens system provides a pixel subtense in object space of 0.30 milliradians or more.

A large numerical aperture is particularly advantageous for use with uncooled bolometric detectors where remote operation forms part of the requirement of the system application. The objective may for example have a numerical aperture of 0.5 or more.

It may be that the instantaneous field of view of the objective is at least ±4.1° diagonal.

It may be that the effective focal length of the objective is less than 90 mm.

A measure of the theoretical optical performance of the objective lens system is given by the dimension of the side of the square boundary within which 70% of the energy from a notional point source in object space is received (the 70% 'Ensquared Energy' dimension). It may be that the 70% ensquared energy dimension is ≤ 25.0µm. It may be that the 80% ensquared energy dimension is ≤ 24 µm over the entire field of view of the objective lens system.

It may be that the objective lens system is also achromatic (corrected for chromatic dispersion) over the operating waveband. It may be that chromatic correction is accomplished by introducing a diffractive profile onto a surface of a lens, for example the rear surface of the second lens.

It may be that the objective lens system is also configured to minimise geometric aberrations. It may be that that is achieved primarily but only partially by optimising lens shape factor. It may be that further reduction of geometric aberrations is achieved by the objective optical lens system including at least one aspheric surface, shaped to reduce the geometric aberrations. For example, the rear surface of the second lens may have an aspheric profile. The rear surface of the rear element may have an aspheric profile. It may be that at least one of the lens surfaces, for example the back surface of the second lens, is a hybrid surface having both a diffractive profile and an aspheric profile.

The remote sensor platform may be, for example, an unmanned aerial vehicle (UAV).

### Description of the Drawings

An example embodiment of the invention will now be described, by way of example only, with reference to the accompanying drawings, of which:
- Figure 1 is an optical system according to the example embodiment of the invention;
- Figure 2 is a plot showing resolution in terms of polychromatic modulation transfer function at 20 cycles mm⁻¹ with a soak temperature range of -40° C to 85° C for the optical system of Fig. 1, an equivalent non-athermalised germanium system, and a diffraction limit system; and
- Figure 3 is a plot corresponding to the plot of Fig. 2, but in terms of a polychromatic modulation transfer function at 40 cycles mm⁻¹.

### Detailed Description

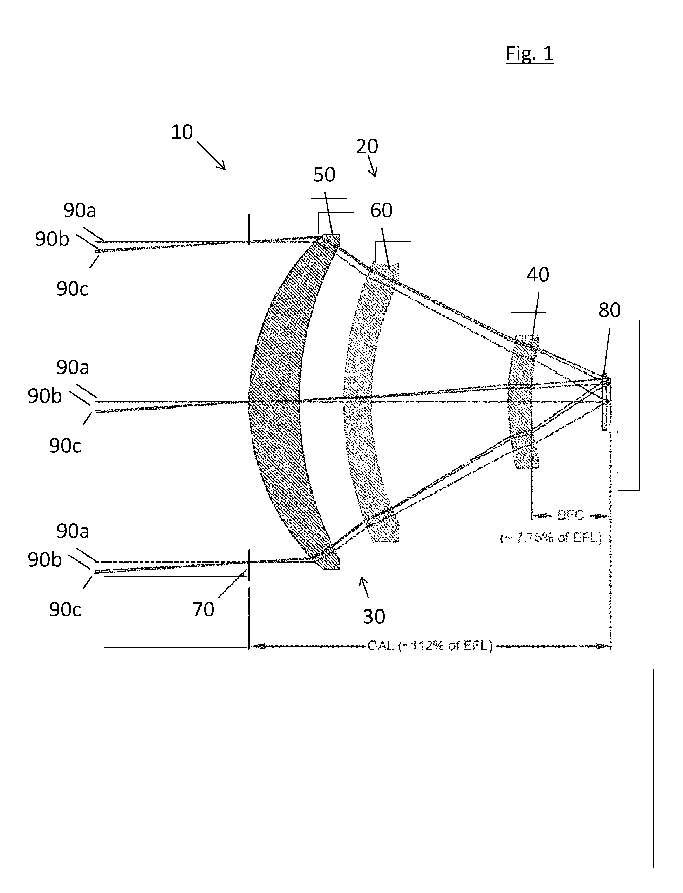

The example optical system (Fig. 1) is a derivative of a 'Petzval' and a compressed triplet type. An objective 10 includes a triplet 20 comprising an air-separated doublet 30 and a weak positive rear element 40, which usefully moderates the power requirement from the doublet group.

In the thermo-optical approach to athermalisation, variations in temperature sensitivity of refractive index 'dn/dt' (also termed the 'thermo-optical coefficient') for the different lens element materials are used to stabilise the focus of the objective. In order to obtain stability of focus, materials of differing 'dn/dt' values are selected for the elements and focal lengths chosen such that the power drifts of the elements cancel out, as the environmental temperature changes. The process of achieving this is analogous to that of conventional colour (chromatic) correction in which the effects of wavelength dispersion in materials, instead of 'dn/dt' values, are balanced. In this example, the doublet 30 is a first lens 50 of a chalcogenide, IG6, and a second lens 60 of Germanium. The Chalcogenide glass, IG6, by Vitron is essentially an amorphous mix of arsenic and selenium, in the ratio 40:60. The rear element 40 is of zinc selenide. A stop 70 is formed in front of the doublet 30.

The objective 10 focuses incoming IR light on a detector 80. The detector 80 is an uncooled bolometric FPA, with a pixel count of 288 x 384 on a pitch of 25.0µm. A comparatively high FPA irradiance needed for efficient radiometric operation of the array. A low-cost sensor module typically requires a pixel subtense in object space of 0.30 milliradians. (A degree of re-scaling of the design is possible to allow for variations in detector geometry and pixel pitch and to accommodate different pixel subtense requirements.)

The objective 10 of this example provides a numerical aperture of 0.5 (f/number of f/1.0), which provides the required high FPA irradiance. The instantaneous field of view (FOV) is ± {2.4° x 3.3° x 4.1°}. The effective focal length (EFL) is 84 mm, which provides the required pixel subtense.

The example design aims to provide a theoretical optical performance, in terms of the dimension of the side of the square boundary within which 70% of the energy from a notional point source in object space is received (70% 'Ensquared Energy' dimension), of ≤ 25.0m. The example design also aims to provide thermo-optical temperature compensation (athermalisation) sufficient to provide stable focus and maintenance of optical performance for soak temperatures over a range of -40°C to +85°C.

The core feature of the design is the athermalisation, which enables focus and hence image quality, to be maintained over the range of environmental soak temperatures indicated, without manual intervention. It is maintenance of good image quality over a full range of likely environmental soak temperatures that makes an objective appropriate for use in remote platforms and hence suitable for a sensor application.

The prescription for the optical design of the objective is given in Table 1 below. In this, Part (i) lists element base curvatures, thicknesses or separations and materials used. In Part (ii), data relating to the aspheric and diffractive profiles of the rear surface of the second lens 60 are indicated. In Part (iii) data relating to the aspheric profile of the rear surface of the second lens 60 are indicated.

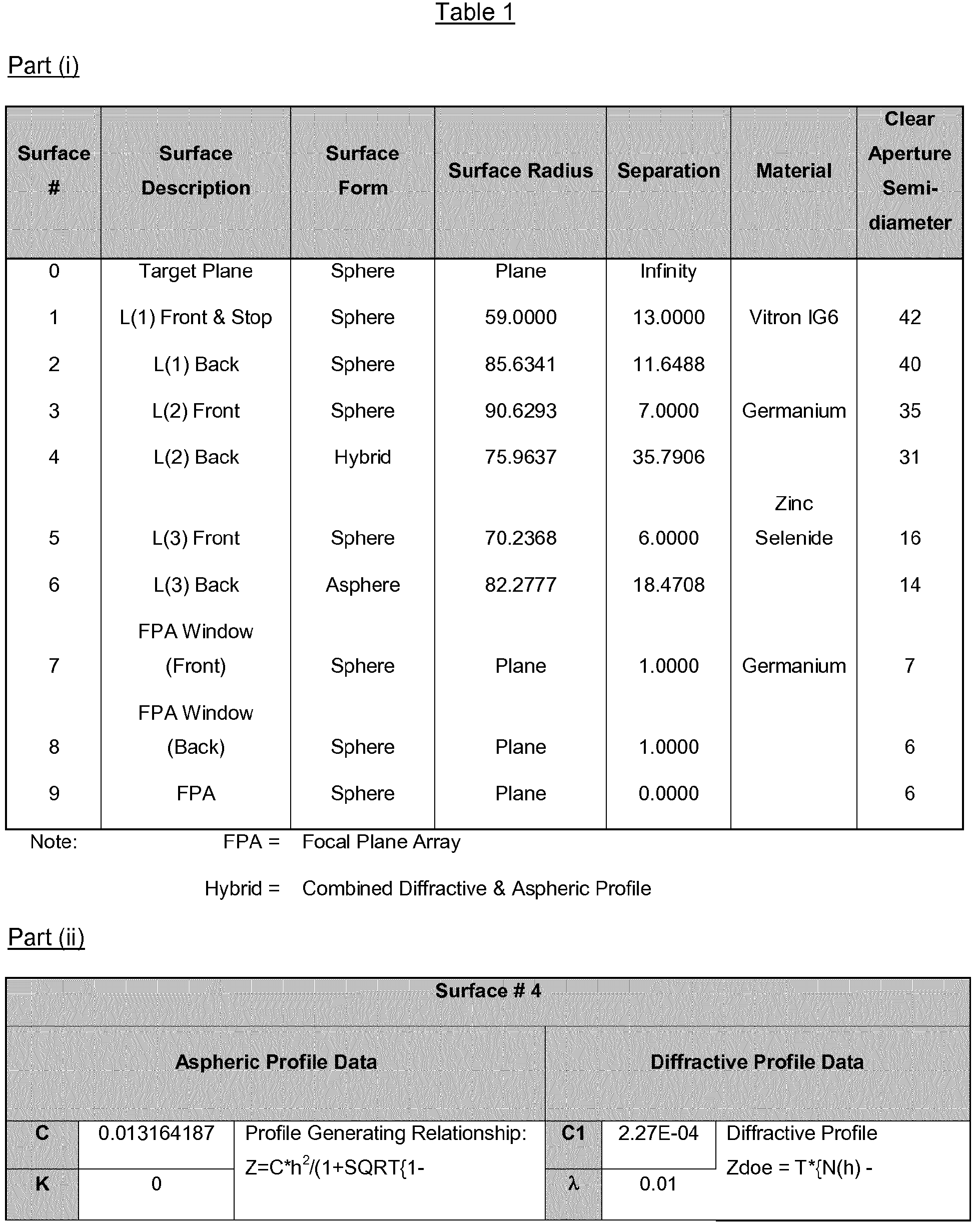

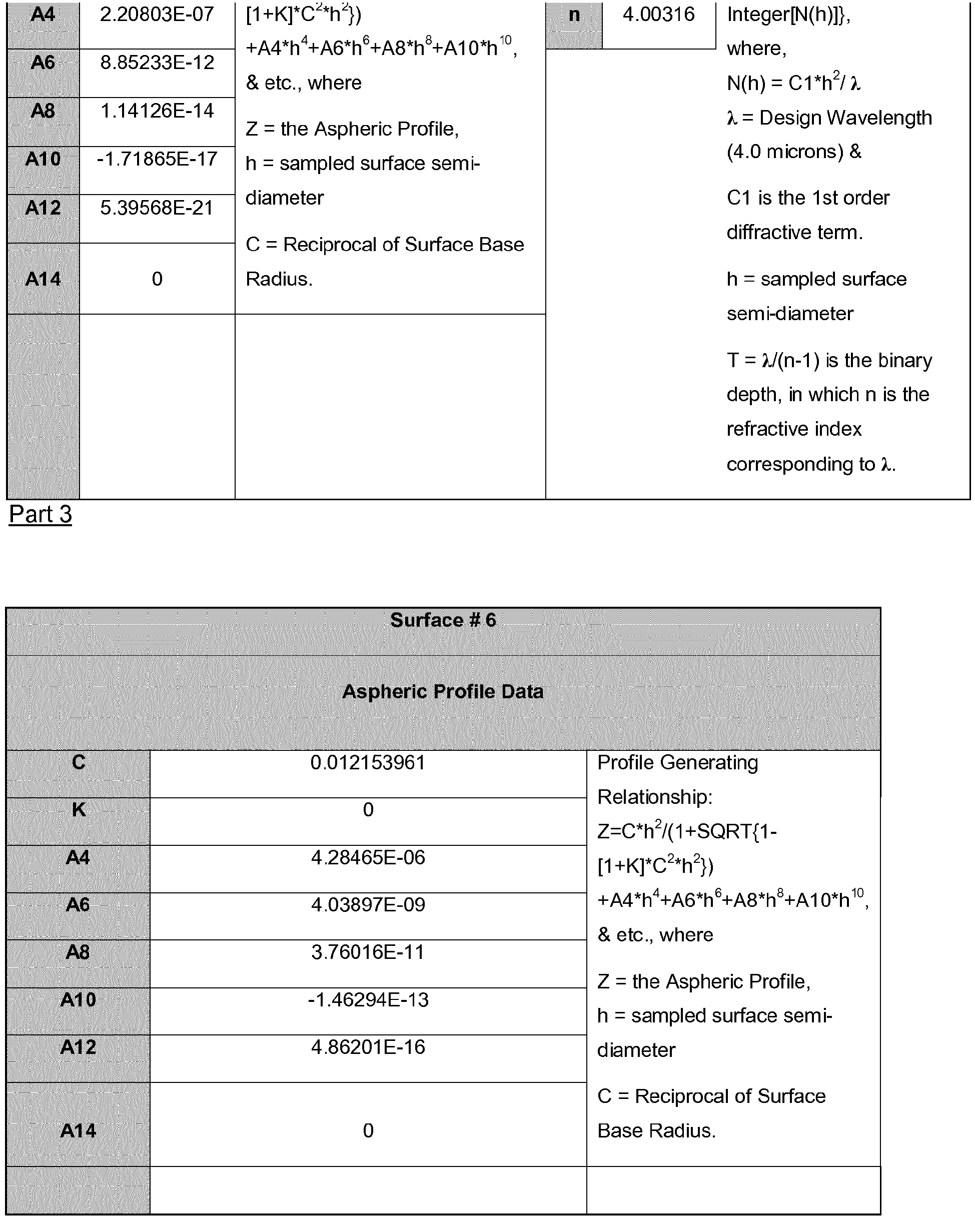

A stable thermo-optical characteristic is achieved for the objective 10 primarily as a consequence of the materials selected for the doublet 20. Significantly, by employing IG6, with its relatively small thermal dispersion characteristic (dn/dt ∼ 4 x 10⁻⁵) for the first lens 50, and Germanium with its comparatively large characteristic (dn/dt ∼ 4 x 10⁻⁴) for the second lens 60, the thermal drift due to the first lens 50 can be entirely offset by the second lens 60. The resultant thermally balanced solution, which is comparable with that which would conventionally be employed for minimising chromatic aberration, leads to a very practical result in which the focal length ratio for (first lens 50) : (second lens 60) is no greater than 0.30.

In order to secure thermal stabilisation for the complete system, there remains a need to generate additional 'over correction' to compensate for dimensional changes (due to expansion or contraction) of the mounting structure and optical elements 40, 50, 60. The IG6 - Germanium materials choice for the doublet 20 however enables that to be achieved very effectively. In this example embodiment, supporting structures are of a single material (in this example aluminium alloy) and provide a common interface between the optical elements, which are hard-mounted within it. There is sufficient flexibility in the design however to allow for different structural materials or material combinations to be used, with the proviso that the structure expands or contracts continuously, in a predictable manner and without deformation.

The doublet 20 is also configured to provide a small additional over-correction to compensate for the thermal drift introduced by the rear element 40.

However, in this example, chromatic aberration cannot be eliminated by materials selection alone, since the wavelength dispersion of the Germanium selected for the main corrective element (the second lens 60) is comparatively small in the LWIR waveband, and insufficient in magnitude to offset that introduced by the first lens 50. Chromatic correction over the operating waveband is however accomplished by introducing an appropriate diffractive profile onto the rear surface of the second lens 60. A particularly high level of correction is in fact achievable with IG6 used for the first lens 50 since, as with most chalcogenide glasses, its dispersion characteristic, like that of the diffractive profile itself, is virtually a linear function of wavelength. The use of Zinc Selenide for the rear element 40 moreover contributes further to the chromatic correction, extending control out towards the edge of the FOV.

Minimisation of monochromatic aberrations (i.e., spherical aberration, coma & etc.) is achieved primarily by optimising lens shape factor. This is only partial, however, since many of the available degrees of freedom in the design are used up in achieving the thermal stabilisation. The extra degrees of freedom required are provided by providing the second lens 60 and the rear element 40 with rear surfaces having aspheric profiles. (In the case of the second lens 60, the aspheric and diffractive forms are combined to form a hybrid profile.)

Overall, the design provides sufficient aberration control to provide, for the full temperature range, a theroetical 80% 'ensquared energy' dimension of 24 microns or less over the entire FOV, including the field corners.

The system is fairly compact, with an overall length (OAL) from the front lens 50 to the FPA 80 only 12% greater than the EFL. The back focal clearance (BFC) is approximately 7¾% of the EFL, which provides sufficient separation for the majority of un-cooled detector encapsulations. (However, this is a parameter that could be modified in a trade-off against performance to satisfy different clearance requirements.)

The instantaneous semi-FOV field beam envelopes 90a, 90b, 90c, relating to the field height, width and diagonal values (2.4° x 3.3° x 4.1°) useful for the FPA detector are also shown in Fig. 1.

Although the performance requirement has been discussed so far in terms of 'ensquared energy', for comparative purposes it is useful to express it in terms of a modulation transfer function (MTF). For a given lens system, this denotes (at a specified spatial frequency) the level of modulation obtained from the image of a notional fully modulated sinusoidal grating object. MTF may be predicted for a given configuration by calculation and, in the case of a manufactured system, it may be determined from the measured degradation of the image that it produces from an illuminated slit object.

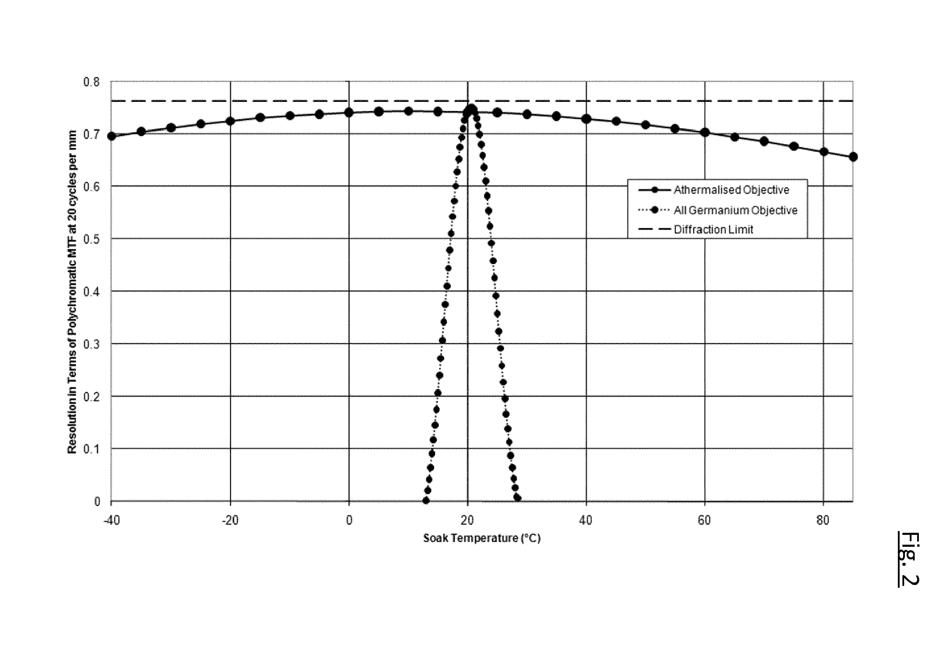

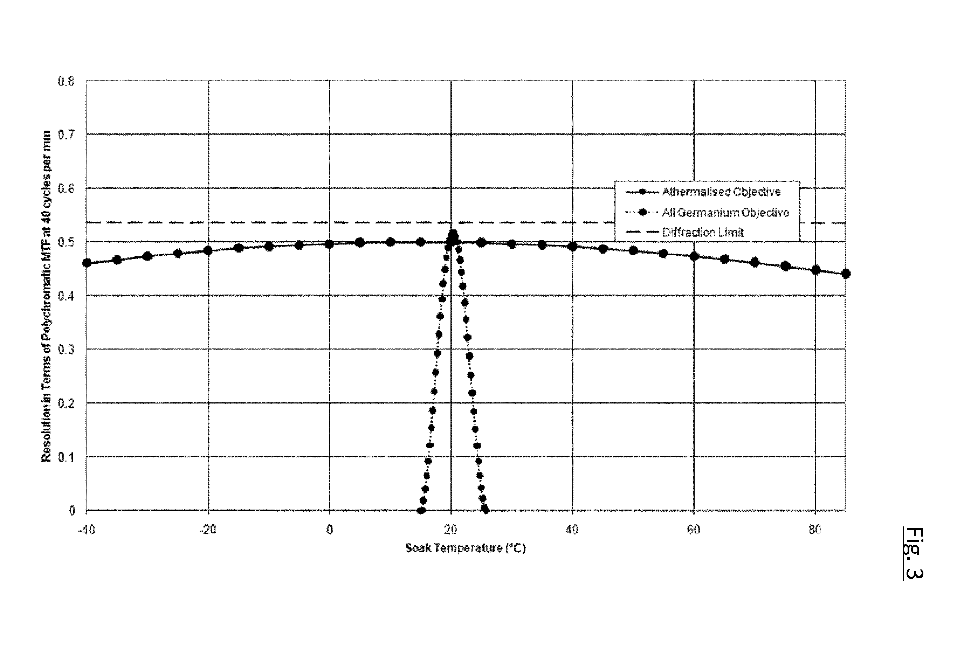

An indication of the high level of stability of the thermal correction embodied in the example design is indicated in Figs. 2 and 3, which illustrate the variation in field centre MTF over a temperature range of -40°C to 85°C. For comparison, the same is shown (dotted line) for a standard (thermally uncorrected) 'all germanium' equivalent system (a three element solution of the type that would either be used in a thermo-mechanically corrected system, or actively athermalised). Although the thermal modelling process used to generate the plots is entirely theory-based, its relative sophistication, including the incorporation of second-order effects (such as the sliding of components over and cell-mounting rings), means that it provides a good representation of the performance changes that may be expected in reality. Also, being part of a proprietary optical design software package ('Code V', by Synopsys) it affords a reasonable level of traceability

The modulations at 20.0 cycles/mm and 40.0 cycles/mm are shown as functions of environmental soak temperature over the range of interest. The frequencies chosen correspond to the cut-off and Nyquist frequencies of the detector array for which the objective configuration is intended. (The cut-off and Nyquist frequencies relate to the geometrical MTF of the detector array. For spatial frequencies up to Nyquist, the detector response is essentially 'well-behaved'; beyond this, aliasing is present, and at cut-off or beyond, the detector provides no resolution).

At the design temperature both systems are well corrected and virtually equivalent in performance. The plots indicate that, at the frequencies stated, the optical performance of the example embodiment is remarkably stable over the full temperature range. It is also clear from the Figure that, when subjected to the same thermal effects, performance in the all-germanium system is almost entirely lost (if refocusing is not introduced) beyond ± 10° from design temperature.

For reference, the maximum performance theoretically achievable in terms of MTF, at the frequencies indicated, is also shown (broken line) in the plots. This limit is set by the diffraction spot size, which is determined exclusively by the f/number and waveband.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An objective lens system for focusing infrared images in a remote sensor platform, the lens system comprising a thermo-optically athermalised lens triplet, formed by a doublet and a rear element, the doublet being a first lens of chalcogenide and a second lens of germanium.

2. A system as claimed in claim 1, wherein the chalcogenide is or includes a mixture of arsenic and selenium.

3. A system as claimed in claim 1 or claim 2, wherein the chalcogenide is amorphous.

4. A system as claimed in claim 2 or claim 3, wherein the chalcogenide is infrared glass IG6.

5. A system as claimed in any preceding claim, wherein the rear element is a third lens of zinc selenide.

6. A system as claimed in any preceding claim, wherein the resolution of the system remains within 20% of diffraction limited performance over a soak temperature range extending over at least 80°C.

7. A system as claimed in any preceding claim, wherein the 70% ensquared energy dimension is less than or equal to 25.0 µm.

8. A system as claimed in any preceding claim, wherein the doublet also provides an additional over-correction selected to compensate for thermal drift introduced by the rear element or for dimensional changes due to expansion or contraction of optical elements, and/or their mounting structure, within the system.

9. A system as claimed in any preceding claim, wherein the objective lens system is arranged to have one or more properties selected from the following list:
a. an overall length, from the first lens to a detector, of between 100% and 120% of the effective focal length of the objective lens system;
b. a back focal clearance of at least 5% of the effective focal length of the objective lens system;
c. a focal length ratio for the first lens to the second lens of 0.30 or less.
d. a numerical aperture of 0.5 or more;
e. an instantaneous field of view of at least ± 4.1°;
f. an effective focal length of less than 90 mm.
g. a pixel subtense in object space of 0.30 milliradians or more at a
detector.

10. A system as claimed in any preceding claim, wherein the objective lens
system is also corrected for chromatic dispersion over an operating waveband.

11. A system as claimed in claim 10, wherein at least one of the lenses
includes a diffractive profile on at least one of its surfaces.

12. A system as claimed in any preceding claim, wherein the objective lens
system is also configured to minimise geometric aberrations.

13. A system as claimed in claim 12, including at least one aspheric surface,
shaped to reduce the geometric aberrations.

14. A system as claimed in any of claims 10 to 13, including at least one lens
surfaces that is a hybrid surface, having both a diffractive profile and an aspheric profile.

15. A remote sensor platform including an objective lens system according to
any preceding claim.
